# EUROPEAN PATENT SPECIFICATION

(11) **EP 3 670 089 B1**
(45) Date of publication and mention of the grant of the patent: **26.05.2021**
(21) Application number: 18460082.3
(22) Date of filing: 18.12.2018
(51) Int. Cl.: B25C 1/04, F24D 3/14

(54) **PNEUMATIC TACKER**
PNEUMATISCHER TACKER
AGRAFEUSE PNEUMATIQUE

(43) Date of publication of application: 24.06.2020
(73) Proprietor: Tia Spolka z .o.o., 37-200 Przeworsk (PL)
(72) Inventor: Slanda, Tomasz, 37-200 Przeworsk (PL); Slanda, Adam, 37-200 Przeworsk (PL)
(74) Representative: Karczmitowicz, Teresa Ewa

(56) References cited:
- EP-A2- 0 936 030
- EP-A2- 2 163 352
- DE-U1-202006 019 963
- US-A- 3 657 968

## Description

The proposed invention refers to fixing pipes or cables on a substructure such as a foam plate being an isolating basis used in the floor heating systems, realized either with use of heating pipes or electric cables. It can be applied also for assembling cooling sytems based on pipes with circulating cooling medium, e.g. glycol.

Fixing heating pipes or cables on isolating basis is carried out most often by one of two methods. According to first method, pipes or cables are laid in the canals shaped in the substructure e.g. isolating foam plate. The examples of such a system are proposed in German patent documents DE19530367 (C1) and DE19612789 (C1) describing a pipe fixing device for heating system pipes on bare floor which includes at least one holding element through which a pipe passes, and a thermal insulating device to insulate the pipe thermally from the floor. The insulating device is in the form of a strip layer, which has a number of annular zones enclosing annular slits. There may be several concentric slits in one zone. The holding element is assembled in such a manner as to compress the insulating material within an enclosed zone against the floor. The holding element may consist of a pressure plate to press the insulation to the floor.

According to second method, heating pipes are fastened on flat surface of the substructure which is usually polyurethane or polystyrene foam plate. The heating pipes are immobilized on the substructure with U-shaped staples the ends of which are pushed into the foam plate, see e.g. German patent application DE10358442 (A1) which discloses U-shaped staples with barbed hooks at their lower ends and outwards pointing extensions. The staples are dispensed from a tool similar to a stapler gun and pushed into the insulating mat for holding the pipe. Several of the elements are assembled to a unit in order to be inserted into the gun. For the creation of a unit several of the elements are positioned in a row by a suitable device and their backs welded together by a hot die touching their surfaces.

There is a number of devices for pressing down the staples, like the gun mentioned above.German patent application DE19861052 (A1) discloses a tacker having a pushrod, a punch and a punch guide made in the form of a one-piece plastic component, onto which a handle and a spring holder can be directly molded. The pushrod has a cross-section profile which can be produced in only two deforming devices, e.g. in the outline of a Swiss cross. The tacker is operated manually.

Similar manually operated device is described in another German application of utility model DE202006005634 (U1). A tacker for fixing of heating pipes on an insulating base consists of a plunger unit, a spring-loaded setting rod and a magazine rod parallel to the setting rod. The distance between the side plates of the plunger unit corresponds to the size of the thickest insertable clip, with a known tolerance, wherein the spacing is smaller than the thickness of two clips. The magazined clips available at the delivery end of the magazine rod are guided onto the inner side of one side plate and therefore lie upon it. Below the locating face of the clips on the inner side of the side plate a spring-loaded ball is positioned in the side plate and protrudes into the shaft of the plunger.

Another manually operated device for fixing pipes on an insulating support, according to international patent application WO8501788 (A1), comprises a magazine intended to receive plastic fixing clamps which are flat i.e. not yet prefolded, a device which feeds laterally the clamps by means of a mechanical device and which bends them with a U shape by passing them on an inclined plane or by a profiling channel, a device conducting the pre-bent clamps through a guiding channel downwardly, the clamps being pushed by a pressure coming from the top on the pipe to be secured to penetrate into the support. The fixing clamps are releasably interconnected by means of a special profile. The feed motion of said apparatus folds them so that they take a U shape. They are plugged in by a pressure applied from the top in a soft support, the barbs of the legs preventing any withdrawal by sliding.

In German patent application DE4320590 (A1) a clip connection system for fastening pipes and cables to wires or grid mats is proposed. The apparatus comprises a bow which engages over the pipe or cable and has on its underside a clipping facility into which a wire receptacle is integrated at the same time. It also comprises a tacker apparatus which closes this clip by a simple downward movement.

The above mentioned tackers enable the operator to work in an upright position. A smaller stapler for fixing a pipe and a fixing pin are proposed in Korean patent document KR20070106135 (A). The stapler comprises a bottom plate, a guide member, a support member, and a guider. The bottom plate holds a plurality of fixing pins and guides the fixing pins downwards through a pin guide protrusion. The guide member guides a punch toward the fixing pin straightly. The support member mounts a main body on a pipe accurately, and inclines the main body with regard to a floor on which the pipe is arrayed. The guider has an elastic member returning the descended punch in place. The punch includes an inclined protrusion, a frame, and a spring. The inclined protrusion raises the punch to a predetermined height with elastic force of the elastic member. Supported by the guider, the frame transfers pressure applied to a grip to the punch. The spring returns the punch back in place.

In another Korean patent document KR20070111030 (A) a tacker for fixing pipes including a body, a tacking unit, and a loading unit is described. The body has a loading space for guiding and setting fixing pins. The tacking unit is installed on one side of the body to tack the fixing pins. The loading unit is installed on two ends of the loading space for continuously feeding the fixing pins to the tacking unit. The tacking unit has a punch sliding along a guide groove disposed on the body. The punch has a tacking groove corresponding to the shape of upper parts of the fixing pins. A handle is installed on an upper part of the punch and exerts pressing force to the punch. A return spring is installed on a lower part of the punch and returns the punch back to initial position after hitting the fixing pin. Other small hand tackers are proposed in Korean utility models KR200428556 (Y1) and KR20140003522 (U).

German patent application DE102006022467 (A1) discloses a tacker needle magazine for tubes and cables comprising single clips with no inner barb or holding region. The single clips has only one barb or holding thread on each side. It has no lateral moldings to prevent twisting of the clips during tacking. The single clips are arranged at a fixed distance from each other.

All the above mentioned tackers are manually powered. The operator has to exert a force on the handle which in case of larger works requires significant effort from the operator.

In British patent specification GB960541 (A) a pneumatically actuated tacker is proposed. The tacker comprises a piston mounted in a cylinder and having a driver co-operable with a tack holding device, a main valve for controlling the flow of compressed air from an accumulator and a secondary valve for controlling the supply of air to a tack magazine. When the tack driver is brought into action, the secondary valve is caused to allow pressure fluid to be supplied to the magazine for automatically feeding tacks therefrom towards the holding device in order to provide tacks for succeeding driving operations. The piston is retained in its inoperative position by a spring and, in this position, is arranged to abut the end of the secondary valve member in order to maintain the latter in a closed position wherein communication between the accumulator and the magazine, via a passage, is cut off Another pneumatic tacker is known from EP0936030 (A2).

According to the claimed invention a pneumatic tacker for fixing pipes or cables on a substructure comprises a housing, a handle and a pneumatic duct providing pressurized gas through the handle to a pneumatic actuator which drives a punch slidable in the housing. The pneumatic duct consists of at least a proximal part being an internal conduit shaped inside the handle and provided at its proximal end with a gas inlet. The word 'proximal' means here 'from the side of the source of pressurized gas', while the word 'distal' means 'the side opposite to proximal'. A spigot or a socket serving for the gas inlet is a proximal pipe joint suitable for pipe connection to external source of pressurized gas, e.g. a gas cylinder or a compressor.

The pneumatic duct is also provided with a stop valve operated by pressing a button in the handle. The stop valve is operated either directly by a button or indirectly by an electronic or electromagnetic switch controlled by the button. The electronic or electromagnetic switch is powered from a small battery or a cell, e.g. rechargeable lithium battery or a Li-ion cell. Time of opening of the stop valve and thus the rate of gas flow is controlled either within the valve by an adjustment screw or by the controls of the electronic or electromagnetic switch, or manually by duration of pressing the button. The deeper the staples have to be pounded into the substructure, the longer has to be the opening time of the stop valve. Preferably the stop valve is a self-closing valve.

The internal conduit has also at least one gas outlet hole located between the stop valve and a distal end of the internal conduit which is provided with a distal pipe joint providing the pressurized gas to the pneumatic actuator. Through this gas outlet hole the pressurized gas can evacuate from the pneumatic duct after driving the pneumatic actuator. This is necessary for the pneumatic actuator to return to initial rest position after driving the punch. To shorten the time of gas evacuation more than one gas outlet holes can be made in the handle. The gas outlet hole is opened when the button is in rest position and closed when the button is in pressed position, so no gas evacuation is possible during the working phase of the pneumatic actuator. It is also possible to make the gas outlet hole which is permanently open and located anywhere between the stop valve and the distal pipe joint. The main function remains the same, however some of the gas pressure impulse is lost.

The internal conduit is connected through the distal pipe joint to the pneumatic actuator which is comprised in the housing and drives the punch which in turn inserts staples into the substructure around the upper part of the pipe or cable surface.

Alternatively, the internal conduit is connected through the distal pipe joint and further through a distal part of the pneumatic duct to the pneumatic actuator. This distal part of the pneumatic duct may be a tubular body or a telescopic tubular body and enables the operator to work in upright position. The operator can adjust the length of the telescopic tube to his individual stature or preferred work position.

The tubular or telescopic body has a gas conduit inside which is joined at its proximal end to the distal pipe joint in the handle and at its distal end to the pneumatic actuator. The tubular/telescopic distal part of the pneumatic duct itself is joined at its proximal end to the handle and at its distal end to the housing. In particular the tubular/telescopic body may be a part of the housing above the pneumatic actuator.

The pneumatic actuator comprises a cylinder closed at its proximal end with a proximal plug having a through hole provided with a socket suitable for joining the distal pipe joint or the distal part of the pneumatic duct, and also closed at its distal end with a distal plug. The pneumatic actuator further comprises an airtight piston movable inside the cylinder between the proximal plug and the distal plug. The piston is driven by pressurized gas delivered through the pneumatic duct and the socket in the proximal plug. The piston is coupled with a piston rod having a return spring and movable in a through hole shaped in the distal plug. This distal plug has at least one gas outlet hole suitable for removing the air from a distal portion of the cylinder formed between the piston and the distal plug when the piston is driven by pressurized gas.

The pneumatic actuator has the means for adjusting the stroke of the piston to the staples length, the pipe diameter etc. Preferably the punch is coupled to the piston rod thus being its distal end, but in another embodiment the piston rod and the punch are separate.

The housing is provided with a guide rail for staples or magazines of staples. The guide rail has un upper part which is linear and a lower part which is curved by about 90 degrees. The staples or magazines of staples slide down the rail and enter one by one into the housing below the punch. Additionally the guide rail is provided with a weight slidable along the guide rail and suitable to press down the staples or magazines of staples towards the housing. The weight can be turned off the rail upper end by more than 90 degrees to enable inserting the staples or magazines of staples. Then the weight is turned back onto the rail.

If the pre-formed staples are U-shaped they are ready for direct use. For flat staples another embodiment of the pneumatic tacker is recommended where the U-shape of the staples is maid inside the housing during punching. The staples are made of plastic or metal.

The distal ends of the housing and the punch have recessions fitting the pipe or cable to be fixed. The recession in the housing and the punch is adjustable to the pipe or cable diameter. Alternatively an adapter fitting the pipe or cable diameter can be applied on distal end of the housing.

The pressurized gas is selected from pressurized air or pressurized nitrogen or pressurized carbon dioxide or mixture of these gases.

The exemplary embodiments of claimed invention are shown on the drawing where:

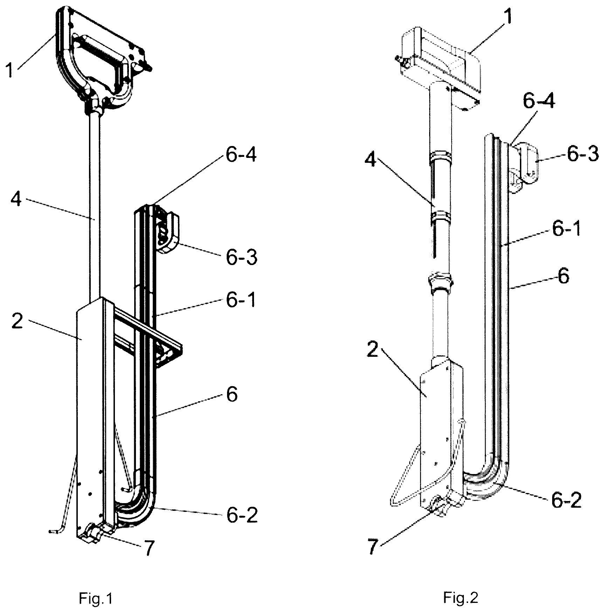

Fig. 1 shows general view of the pneumatic tacker with tubular body between the handle and the housing;
Fig. 2 shows general view of the pneumatic tacker with telescopic tubular body;

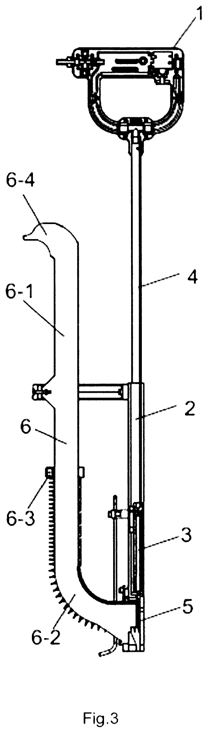

Fig. 3 shows cross section of the pneumatic tacker with tubular body;

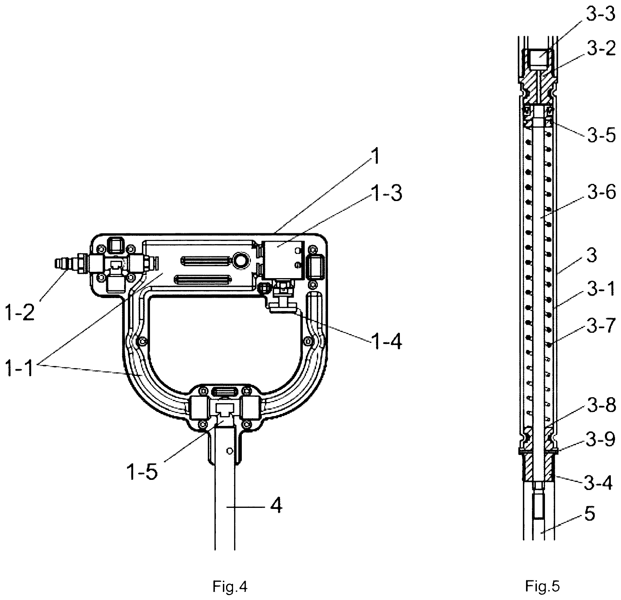

Fig. 4 shows cross section of the handle;
Fig. 5 shows cross section of the pneumatic actuator;

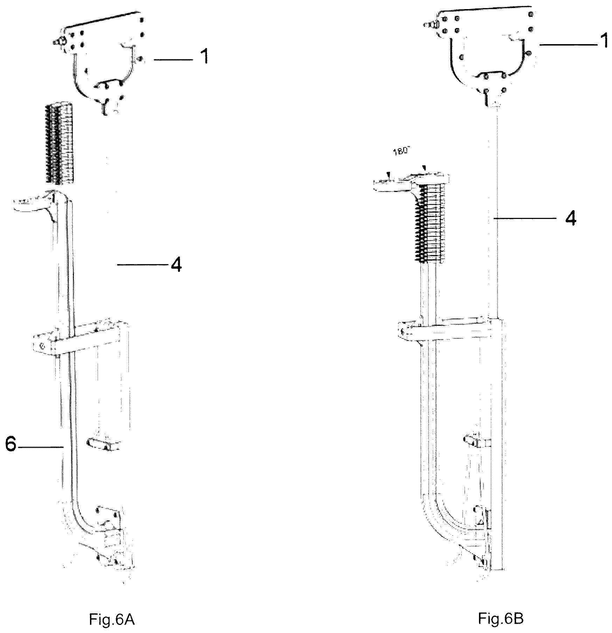

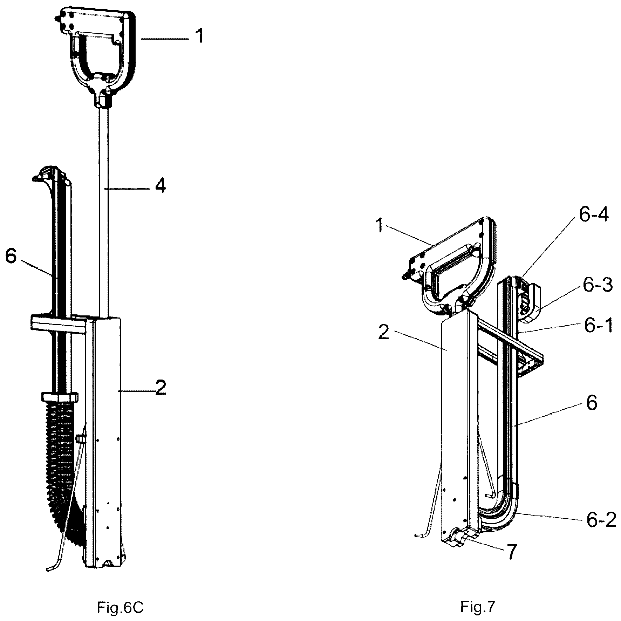

Figs. 6A, 6B and 6C show application of U-shaped staples on the guide rail;
Fig. 7 shows general view of the pneumatic tacker without tubular body between the handle and the housing.

A pneumatic tacker according to the invention comprises a housing 2 with a punch 5, a handle 1 and a pneumatic duct. The pneumatic duct consists of a proximal part and a distal part. The proximal part is an internal conduit 1-1 shaped inside the handle 1 and provided at its proximal end with a proximal pipe joint 1-2 in the form of a spigot suitable for pipe connection to external source of pressurized gas. The internal conduit 1-1 is also provided with a stop valve 1-3 operated by pressing a button 1-4 and has a gas outlet hole located between the stop valve 1-3 and a distal end of the internal conduit 1-1 provided with a distal pipe joint 1-5. The gas outlet hole is opened when the button 1-4 is in rest position and closed when the button 1-4 is pressed by the operator. The stop valve 1-3 is a self-closing valve with controlled rate of gas flow. The internal conduit 1-1 is connected through the distal pipe joint 1-5 and further through the distal part of the pneumatic duct 4 to a pneumatic actuator 3. The pneumatic actuator 3 is comprised in the housing 2 and drives a punch 5 to insert a staple into the substructure around the upper part of the pipe or cable surface.

The distal part of the pneumatic duct 4 is joined at its proximal end to the handle 1 and at its distal end to the housing 2. The distal part of the pneumatic duct 4 is a tubular and preferably telescopic body and has a gas conduit inside joined at its proximal end to the distal pipe joint 1-5 and at its distal end to the pneumatic actuator 3.

The pneumatic actuator 3 comprises a cylinder 3-1 closed at proximal end with a proximal plug 3-2 having a through hole provided with a socket 3-3 suitable for joining the distal part of the pneumatic duct. The cylinder 3-1 is also closed at distal end with a distal plug 3-4. The pneumatic actuator 3 further comprises an airtight piston 3-5 movable inside the cylinder 3-1 and driven by pressurized gas delivered through the pneumatic duct and the socket 3-3. The piston 3-5 is coupled with a piston rod 3-6 having a return spring 3-7 and movable in a through hole 3-8 shaped in the distal plug 3-4. The distal plug 3-4 has at least one gas outlet hole 3-9 suitable for removing the air from a distal portion of the cylinder 3-1 formed between the piston 3-5 and the lower plug 3-4 when the piston 3-5 is driven by pressurized gas.

The housing 2 of the pneumatic tacker is provided with a guide rail 6 for staples or magazines of staples. The guide rail 6 has un upper part 6-1 which is linear and a lower part 6-2 which is curved by about 90 degrees. The guide rail 6 is provided with a weight 6-3 slidable along the guide rail 6 and suitable to press down the staples or magazines of staples. The weight 6-3 can be turned at the guide rail upper end 6-4 by about 180 degrees to enable inserting the staples or magazines of staples.

The tacker in presented embodiment works with U-shaped plastic staples.

The lower ends of the housing 2 and the punch 5 have recessions 7 fitting the pipe or cable to be fixed. The recession 7 in the housing is adjustable to the pipe or cable diameter.

The claimed pneumatic tacker is energized with pressurized gas selected from air, nitrogen, carbon dioxide or mixture of these gases.

## Claims

1. A pneumatic tacker for fixing pipes or cables on a substructure, comprising a housing with a punch, a handle and a pneumatic duct consisting of at least a proximal part being an internal conduit (1-1) shaped inside the handle (1) and provided at its proximal end with a proximal pipe joint (1-2) suitable for pipe connection to external source of pressurized gas, and also provided with a stop valve (1-3) operated by pressing a button (1-4), wherein said internal conduit (1-1) has at least one gas outlet hole located between the stop valve (1-3) and a distal end of the internal conduit (1-1) provided with a distal pipe joint (1-5), said at least one gas outlet hole being opened when the button (1-4) is in rest position and closed when the button (1-4) is in pressed position, and in that the internal conduit (1-1) is connected through the distal pipe joint (1-5) and optionally through a distal part of the pneumatic duct (4) to a pneumatic actuator (3) comprised in the housing (2) and driving a punch (5) to insert a staple into the substructure around the upper part of the pipe or cable surface.

2. The tacker according to claim 1, **characterized in that** the pneumatic actuator (3) comprises a cylinder (3-1) closed at proximal end with a proximal plug (3-2) having a through hole provided with a socket (3-3) suitable for joining the distal pipe joint (1-5) or the distal part of the pneumatic duct, and also closed at distal end with a distal plug (3-4), said pneumatic actuator (3) further comprising an airtight piston (3-5) movable inside the cylinder (3-1) and driven by pressurized gas delivered through the pneumatic duct and the socket (3-3), the piston (3-5) being coupled with a piston rod (3-6) having a return spring (3-7) and movable in a through hole (3-8) shaped in the distal plug (3-4), and **in that** the distal plug (3-4) has at least one gas outlet hole (3-9) suitable for removing the air from a distal portion of the cylinder (3-1) formed between the piston (3-5) and the distal plug (3-4) when the piston (3-5) is driven by pressurized gas.

3. The tacker according to claim 1 or 2, **characterized in that** the proximal pipe joint (1-2) is a spigot.

4. The tacker according to claim 1 or 2, **characterized in that** the proximal pipe joint (1-2) is a socket.

5. The tacker according to any of claims 1 to 4, **characterized in that** the distal part of the pneumatic duct (4) is joined at its proximal end to the handle (1) and at its distal end to the housing (2).

6. The tacker according to claim 5, **characterized in that** the distal part of the pneumatic duct (4) is a tubular body and has a gas conduit inside joined at its proximal end to the distal pipe joint (1-5) and at its distal end to the pneumatic actuator (3).

7. The tacker according to claim 5, **characterized in that** the distal part of the pneumatic duct (4) is a tubular telescopic body and has a gas conduit inside, joined at its proximal end to the distal pipe joint (1-5) and at its distal end to the pneumatic actuator (3).

8. The tacker according to any of preceding claims, **characterized in that** the housing (2) is provided with a guide rail (6) for staples or magazines of staples.

9. The tacker according to claim 8, **characterized in that** the guide rail (6) has un upper part (6-1) which is linear and a lower part (6-2) which is curved by about 90 degrees.

10. The tacker according to claim 8 or 9, **characterized in that** the guide rail (6) is provided with a weight (6-3) slidable along the guide rail (6) and suitable to press down the staples or magazines of staples, and **in that** the weight (6-3) can be turned or removed at the guide rail upper end (6-4) to enable inserting the staples or magazines of staples.

11. The tacker according to any of preceding claims, **characterized in that** the distal ends of the housing (2) and the punch (5) have recessions (7) fitting the pipe or cable to be fixed.

12. The tacker according to claim 11, **characterized in that** the recession (7) is adjustable to the pipe or cable diameter.

13. The tacker according to any of preceding claims, **characterized in that** the stop valve (1-3) is a self-closing valve with controlled rate of gas flow.

## Patentansprüche

1. Druckluftklammergerät zur Befestigung von Rohren oder Kabeln am Untergrund, bestehend aus einem Gehäuse mit Stempel, einer Halterung und einem Druckluftkanal bestehend mindestens aus dem nahen Teil als Innenleitung (1-1) in der Halterung (1) mit dem nahen Rohranschluss (1-2) am nahen Ende zum Anschließen des Rohrs an externe Druckgasquelle, sowie mit einem Absperrventil (1-3), das mittels des Tasters (1-4) betätigt wird, wobei die genannte Innenleitung (1-1) mindestens ein Gaseinlaufloch zwischen dem Absperrventil (1-3) und dem entfernten Ende der Innenleitung (1-1) mit dem weiteren Rohranschluss (1-5) aufweist, wobei mindestens eine Gaseinlauföffnung geöffnet ist, wenn der Taster (1-4) sich in der Ruhestellung befindet, oder geschlossen ist, wenn der Taster (1-4) sich in der gedrückten Position befindet, wobei die Innenleitung (1-1) über den entfernten Rohranschluss (1-5) und optional den entfernten Teil des Druckluftkanals (4) mit dem Druckluftzylinder (3) im Gehäuse (2) zur Betätigung des Stempels (5) zur Einbringung der Klammer in den Untergrund um den oberen Rohrteil oder der Kabeloberfläche angeschlossen ist.

2. Klammergerät nach Anspruch 1, **dadurch gekennzeichnet, dass** der Druckluftzylinder (3) aus dem Zylinder (3-1) besteht, der an dem nahen Ende mittels des Stopfens (3-2) geschlossen ist, mit Durchgangsloch mit Buchse (3-3) zur Befestigung mit dem entfernten Rohranschluss (1-5) oder dem entfernten Teil der Luftleitung, ebenso geschlossen mittels des weiteren Stopfens (3-4) am entfernten Ende, wobei der genannte Druckluftzylinder (3) den luftdichten Kolben (3-5) aufweiset, der sich im Zylinder (3-1) bewegt und mit Druckgas angetrieben wird, das über den Druckluftkanal und die Buchse (3-3) zugeführt wird, wobei der Kolben (3-5) mit der Kolbenstange (3-6) gekoppelt ist, welche die Rückholfeder (3-7) aufweist und sich im Durchgangsloch (3-8) am weiter entfernten Stopfen (3-4) bewegt, wobei der weitere Stopfen (3-4) über mindestens ein Gasauslassloch (3-9) verfügt zur Abführung der Luft aus dem entfernten Teil des Zylinders (3-1) zwischen dem Kolben (3-5) und dem weiter entfernten Stopfen (3-4), wenn der Kolben (3-5) durch das Druckgas angetrieben wird.

3. Klammergerät nach Anspruch 1 oder 2, **dadurch gekennzeichnet, dass** der nahe Rohranschluss (1-2) als Zapfenanschluss ausgeführt ist.

4. Klammergerät nach Anspruch 1 oder 2, **dadurch gekennzeichnet, dass** der nahe Rohranschluss (1-2) als Buchsenanschluss ausgeführt ist.

5. Klammergerät nach einem der Ansprüche 1 bis 4, **dadurch gekennzeichnet, dass** der entfernte Teil des Druckluftkanals (4) an seinem näher entfernten Ende mit der Halterung (1) und an seinem weiter entfernten Ende mit dem Gehäuse (2) verbunden ist.

6. Klammergerät nach Anspruch 5, **dadurch gekennzeichnet, dass** der entfernte Teil des Druckluftkanals (4) ein Rohrgehäuse darstellt und über die Gasleitung verfügt, die innen an seinem näheren Ende mit dem entfernten Rohranschluss (1-5) und am weiteren Ende mit dem Druckluftzylinder (3) verbunden ist.

7. Klammergerät nach Anspruch 5, **dadurch gekennzeichnet, dass** der entfernte Teil des Druckluftkanals (4) ein Teleskopgehäuse darstellt und über eine interne Gasleitung verfügt, die an seinem näheren Ende mit dem entfernten Rohranschluss (1-5) und am weiteren Ende mit dem Druckluftzylinder (3) verbunden ist.

8. Klammergerät nach einem der oben genannten Ansprüche, **dadurch gekennzeichnet, dass** das Gehäuse (2) über eine Führungsschiene (6) für Klammer oder Klammermagazine verfügt.

9. Klammergerät nach Anspruch 8, **dadurch gekennzeichnet, das** die Führungsschiene (6) über den linearen oberen Teil (6-1) und den unter circa 90 Grad gebogenen unteren Teil (6-2) verfügt.

10. Klammergerät nach Anspruch 8 oder 9, **dadurch gekennzeichnet, dass** die Führungsschiene (6) über das Gewicht (6-3) verfügt, das entlang der Führungsschiene (6) verschiebbar ist und zum Andrucken der Klammer oder Klammermagazine geeignet ist und dass das Gewicht (6-3) am oberen Ende der Führungsschiene (6-4) gedreht oder abgenommen werden kann, um die Beladung mit Klammern oder Klammermagazinen zu ermöglichen.

11. Klammergerät nach einem der oben genannten Ansprüche, **dadurch gekennzeichnet, dass** die entfernten Enden des Gehäuses (2) und des Stempels (5) über Aussparungen (7) verfügen, die an das zu befestigende Rohr oder Kabel passen.

12. Klammergerät nach Anspruch 11, **dadurch gekennzeichnet, dass** die Aussparung (7) je nach dem Durchmesser des Kabel oder Rohres verstellbar ist.

13. Klammergerät nach einem der vorstehenden Ansprüche, **dadurch gekennzeichnet, dass** das Absperrventil (1-3) ein Selbstschlussventil mit Gasdurchflussregelung ist.

## Revendications

1. Une agrafeuse pneumatique pour fixer des tuyaux ou des câbles sur une sous-structure, comprenant un boîtier avec un poinçon, une poignée et une conduite pneumatique constituée d'au moins une partie proximale qui est un conduit interne (1-1) formé à l'intérieur de la poignée (1) et pourvu à son extrémité proximale d'un raccord de tuyau proximal (1-2) approprié pour le raccordement du tuyau à une source externe de gaz sous pression, et aussi pourvu d'une soupape d'arrêt (1-3) actionnée en appuyant sur un bouton (1-4), dans laquelle ledit conduit interne (1-1) comporte au moins un orifice de sortie du gaz situé entre la soupape d'arrêt (1-3) et une extrémité distale du conduit interne (1-1) pourvue d'un raccord de tuyau distal (1-5), ledit orifice de sortie du gaz étant ouvert lorsque le bouton (1-4) est en position de repos et fermé lorsque le bouton (1-4) est en position enfoncée, et dans laquelle le conduit interne (1-1) est relié par le raccord de tuyau distal (1-5) et éventuellement par une partie distale de la conduite pneumatique (4) à un actionneur pneumatique (3) compris dans le boîtier (2) et entraînant le poinçon (5) pour insérer une agrafe dans la sous-structure autour de la partie supérieure de la surface du tuyau ou du câble.

2. L'agrafeuse selon la revendication 1, **caractérisée en ce que** l'actionneur pneumatique (3) comprend un cylindre (3-1) fermé à son extrémité proximale par un bouchon proximal (3-2) ayant un trou traversant muni d'une douille (3-3) adaptée pour relier le raccord de tuyau distal (1-5) ou la partie distale du conduit pneumatique, et également fermé à l'extrémité distale par un bouchon distal (3-4), ledit actionneur pneumatique (3) comprenant en outre un piston étanche à l'air (3-5) mobile à l'intérieur du cylindre (3-1) et entraîné par du gaz sous pression délivré par la conduite pneumatique et la douille (3-3), le piston (3-5) étant couplé à une tige de piston (3-6) ayant un ressort de retour (3-7) et mobile dans un trou traversant (3-8) formé dans le bouchon distal (3-4), et **en ce que** le bouchon distal (3-4) a au moins un trou de sortie de gaz (3-9) adapté pour évacuer l'air de la partie distale du cylindre (3-1) formée entre le piston (3-5) et le bouchon distal (3-4) lorsque le piston (3-5) est entraîné par du gaz sous pression.

3. L'agrafeuse selon les revendications 1 ou 2, **caractérisée en ce que** le raccord de tuyau proximal (1-2) est un embout.

4. L'agrafeuse selon les revendications 1 ou 2, **caractérisée en ce que** le raccord de tuyau proximal (1-2) est une douille.

5. L'agrafeuse selon l'une des revendications 1 à 4, **caractérisée en ce que** la partie distale de la conduite pneumatique (4) est reliée à son extrémité proximale à la poignée (1) et à son extrémité distale au boîtier (2).

6. L'agrafeuse selon la revendication 5, **caractérisée en ce que** la partie distale de la conduite pneumatique (4) est un corps tubulaire et possède à l'intérieur conduit de gaz à l'intérieur, relié à son extrémité proximale au raccord de tuyau distal (1-5) et à son extrémité distale à l'actionneur pneumatique (3).

7. L'agrafeuse selon la revendication 5, **caractérisée en ce que** la partie distale de la conduite pneumatique (4) est un corps tubulaire télescopique et possède un conduit de gaz à l'intérieur, relié à son extrémité proximale au raccord de tuyau distal (1-5) et à son extrémité distale à l'actionneur pneumatique (3).

8. L'agrafeuse selon l'une des revendications précédentes, **caractérisée en ce que** le boîtier (2) est muni d'un rail de guidage (6) pour les agrafes ou les magasins d'agrafes.

9. L'agrafeuse selon la revendication 8, **caractérisée en ce que** le rail de guidage (6) a une partie supérieure (6-1) qui est linéaire et une partie inférieure (6-2) qui est courbée d'environ 90 degrés.

10. L'agrafeuse selon les revendications 8 ou 9, **caractérisée en ce que** le rail de guidage (6) est muni d'un poids (6-3) pouvant coulisser le long du rail de guidage (6) et adapté pour presser vers le bas les agrafes ou les magasins d'agrafes, et **en ce que** le poids (6-3) peut être tourné ou retiré à l'extrémité supérieure du rail de guidage (6-4) pour permettre l'insertion des agrafes ou des magasins d'agrafes.

11. L'agrafeuse selon l'une des revendications précédentes, **caractérisée en ce que** les extrémités distales du boîtier (2) et du poinçon (5) présentent des évidements (7) permettant de fixer le tuyau ou le câble.

12. L'agrafeuse selon la revendication 11, **caractérisée en ce que** l'évidement (7) est ajustable au diamètre du tuyau ou du câble.

13. L'agrafeuse selon l'une des revendications précédentes, **caractérisée en ce que** la soupape d'arrêt (1-3) est une soupape à fermeture automatique avec un débit de gaz contrôlé.
